# EUROPEAN PATENT APPLICATION

(11) **EP 3 782 893 A1**
(43) Date of publication of application: **24.02.2021**
(21) Application number: 19808123.4
(22) Date of filing: 27.03.2019
(51) Int. Cl.: B62M 1/10, B62M 1/18, B62M 1/24, B62M 9/04

(54) **ADJUSTABLE SPEED EFFORT-SAVING BICYCLE**

(30) Priority: 25.05.2018 CN 201810516573
(71) Applicant: Zeng, Dongbin, Chengdu, Sichuan 641400 (CN)
(72) Inventor: Zeng, Dongbin, Chengdu, Sichuan 641400 (CN)
(74) Representative: Jannig & Repkow Patentanwälte PartG mbB
(86) International application number: PCT/CN2019/079810
(87) International publication number: WO 2019/223418

(57) **Abstract**

An adjustable speed effort-saving bicycle, comprising a front wheel assembly (1), a rear wheel assembly (2), and a bicycle frame (3), the front wheel assembly (1) and the rear wheel assembly (2) being mounted respectively on either the front or rear end of the vehicle frame (3), also comprising a quad-connecting rod mechanism, a chain wheel (4), chain A (5), and a transmission mechanism for use in converting the weight of a rider into a rocking force. The quad-connecting rod mechanism is mounted on the bicycle frame (3). The chain wheel (4) is rotatably mounted on the bicycle frame (3) and meshes with the middle part of chain A (5). The chain wheel (4) is transmissively connected to the rear wheel assembly (2) via a transmission apparatus. One end of chain A (5) is slidably connected to an output frame-connecting rod (6) of the quad-connecting rod mechanism. A bent part (7) extends from a connecting end of the output frame-connecting rod (6) to the bicycle frame (3). The other end of chain A (5) is connected to the bent part (7). A tensioner (8) used for tensioning chain A (5) is provided between the bent part (7) and the output frame-connecting rod (6). The bicycle allows the speed to be adjusted easily and quickly and safeguards the physical and mental health of the rider.

## Description

### Technical Field

The present invention relates to the technical field of bicycles, in particular to an adjustable speed effort-saving bicycle.

### Background Technology

Transmission of conventional bicycles is done by oscillation movement ignited by human pedaling. It is well known that there is a fatal dead center in the oscillation movement by human pedaling, which causes "no power transmitted while labor spent", and transmission efficiency is quite low near the dead center, resulting in a substantial waste of limited labor. As our society diversifies, a bicycle is not only a riding tool, it is also a body fitting tool and sports competition facility, or a travelling and entertaining article etc. In view of the shortcomings of traditional bicycles that are difficult to ride and affecting physical health adversely due to long time sitting, there are currently some bicycles which could not only save efforts, but also achieve physical exercise. However, these bicycles have no corresponding speed regulation mechanism, and it is difficult to adjust speed when cycling, which increases the risk of cycling, i.e., physical and mental health of a rider is subject to danger when cycling speed is too fast.

### Summary of the Invention

In order to solve the above technical problems, the present invention provides an adjustable speed effort-saving bicycle, which could adjust the speed simply and quickly, and safeguard the rider's physical and mental health.

The technical solution of the invention to the above technical problems is as follows: an adjustable speed effort-saving bicycle comprises a front wheel assembly, a rear wheel assembly, and a bicycle frame, the front wheel assembly and the rear wheel assembly being mounted respectively on the front or rear end of the vehicle frame; and it further comprises a quad-connecting rod mechanism, a chain sprocket, chain A, and a transmission mechanism for use in converting the weight of a rider into a rocking force, in which the quad-connecting rod mechanism is mounted on the bicycle frame, the chain sprocket is rotatably mounted on the bicycle frame and meshes with the middle part of chain A, the chain sprocket is transmissively connected to the rear wheel assembly via a transmission apparatus, one end of chain A is slidably connected to an output frame-connecting rod of the quad-connecting rod mechanism, a bent part extends from a connecting end of the output frame-connecting rod to the bicycle frame, the other end of chain A is connected to the bent part, and a tensioner used for tensioning chain A is provided between the bent part and the output frame-connecting rod.

The present invention has following beneficial effects: the gravity is inputted to drive the quad-connecting rod mechanism so that the output frame-connecting rod of the quad-connecting rod mechanism obtains a rocking force which is transmitted to the transmission mechanism via the chain A, thereby completing drive of the bicycle, wherein the moment arm could be simply adjusted by adjusting the position of chain A relative to the output frame-connecting rod, so as to change the output torque of the chain sprocket and complete the speed regulation, which is simple and fast.

On the basis of the above technical solution, the invention could also be improved as follows:
Further, the quad-connecting rod mechanism comprises a pedal, a connecting rod and the output frame-connecting rod; the middle part of the pedal is rotatably mounted on the lower end of the middle part of the bicycle frame, the lower end of the connecting rod is hinged to the rear end of the pedal, the upper end of the connecting rod is hinged to an end of output frame-connecting rod far away from the bent part, and an end of output frame-connecting rod far away from the connecting rod is hinged to the bicycle frame.

The beneficial effect of adopting the above further solution is to make a simple structure of the present invention, in which the pedal is used as an input frame-connecting rod of the quad-connecting rod mechanism to convert the gravity of the rider into the driving force of the quad-connecting rod mechanism, and the structure thereof is simply and easy to use.

Further, the pedal comprises a bent strip, of which two support arms forming an angle called Alpha are provided, and the angle Alpha is larger than or equal to 179 degree and less than 180 degree.

The beneficial effect of adopting the above further solution is to avoid a dead center and facilitate cycling.

Further, a slide block is arranged on the output frame-connecting rod, the slide block is connected to an end of the chain A, and on the output frame-connecting rod is arranged a screw transmission mechanism for driving the slide block to slide along the output frame-connecting rod.

The beneficial effect of adopting the above further solution is to make the present invention simple in structure, convenient to adjust and stable in use, moreover, by using the slide block it is convenient to control displacement of the chain A against the output frame-connecting rod, and achieve continuously variable speed regulation.

Further, a handle is fixed on top of a front end of the bicycle frame, and a seat is fixed on the hinged end between the connecting rod and the output frame-connecting rod.

The beneficial effect of adopting the above further solution is that the rider's gravity on both the seat and pedals could drive the quad-connecting rod mechanism, which is more labor-saving and it is no longer necessary to involve long time of foot movement and full body movement to complete cycling to achieve good exercise effect.

Further, a toothed sector is fixedly provided on the chain sprocket, a flywheel A engaging with the toothed sector is installed on the bicycle frame, and the flywheel A is transmissively connected to the rear wheel assembly by the transmission mechanism.

The beneficial effect of adopting the above further solution is that mechanical transmission is stable, simple and reliable.

Further, the transmission mechanism comprises a flywheel B, a chain B and flywheel C, diameter of the flywheel B is larger than diameter of the flywheel C, diameter of the flywheel B is larger than diameter of the flywheel A, the flywheel B and the flywheel A are coaxially connected, the flywheel C is transmissively connected to the flywheel B by the chain B, and central shaft of the flywheel C is connected to the rear wheel assembly.

The beneficial effect of adopting the above further solution is as diameter of flywheel B is larger than diameter of flywheel A, the transmission ratio is improved and more effort is saved.

A pedestal for limiting downward movement of the output frame-connecting rod is provided at a lower part of the bicycle frame, bottom of the pedestal is fixed to the lower part of the bicycle frame and on top of the pedestal is installed a cushion which is located directly below the middle of the output frame-connecting rod, and the pedestal, connecting rod, and the output frame-connecting rod are all telescopic rods.

Beneficial effect of adopting the above further solution lies in that by providing the pedestal overall stability is increased and swinging scope of the output frame-connecting rod and the height of the seat is made adjustable, and suitable for use by users of different body sizes.

The transmission mechanism further comprises an intermediate flywheel; a rotating shaft extends perpendicularly from the rotatable connection point between the pedal and the bicycle frame, the intermediate flywheel is fixedly sleeved on the rotating shaft, and the intermediate flywheel is transmissively connected to the flywheel C via the chain B.

Beneficial effect of adopting the above further solution is that support points of chain A has been increased to make the bicycle more reliable and prevent the chain from falling off. At the same time, when the flywheel A reverses, the intermediate flywheel could drive the chain A to complete transmission.

The transmission mechanism comprises a chain C , a chain D , a flywheel E , a flywheel D , a transition flywheel and an intermediate chain disc; a rotating shaft extends vertically from the rotatable connection between the pedal and the bicycle frame, the transition flywheel is sleeved on the rotating shaft, the intermediate chain disc and the transition flywheel are coaxially configured and the intermediate chain disc is connected to outer disc body of the transition flywheel; the flywheel E is coaxially connected with the flywheel A, diameter of the flywheel E is larger than diameter of the flywheel A, the flywheel E is transmissively connected to the transition flywheel via the chain C; the intermediate chain disc is transmissively connected to the flywheel D via the chain D, the flywheel D is connected to the rear wheel assembly, diameter of the flywheel E is larger than diameter of the intermediate chain disc, diameter of the intermediate chain disc is larger than diameter of the flywheel D, and diameter of the flywheel D is larger than diameter of the transition flywheel.

The beneficial effect of adopting the above further solution is that the arrangement of transition flywheel and intermediate flywheel enables the transmission mechanism to drive via two chains, which makes a more reliable structure of the present invention, thereby further improving the transmission ratio, and making cycling more labor-saving.

### Description of Drawings

FIG. 1 is a structural diagram of the present invention;
FIG. 2 is a structural diagram of an Embodiment 2 of the present invention;
FIG. 3 is a structural diagram of an Embodiment 3 of the present invention;
FIG. 4 is a structure diagram of the pedal;
FIG. 5 is a structural diagram of an Embodiment 4 of the present invention;

The markups in the drawings are indicated as follows:
1-front wheel assembly;
2-rear wheel assembly;
3-bicycle frame;
4-chain sprocket;
5-chain A;
6-output frame-connecting rod;
7-bent part;
8-tensioner;
9-pedal;
10-connecting rod;
11-slide block;
12-seat;
13-flywheel A;
14-toothed sector;
15- flywheel B;
16-chain B;
17-flywheel C;
18-intermediate flywheel;
19-transition flywheel;
20-flywheel E;
21-intermediate chain disc;
22 flywheel D;
23-chain C;
24-chain D;
25-pedestal;
26-handle;
27- screw transmission mechanism.

### Embodiments

In combination with the attached drawings, the principle and characteristics of the present invention are described below. The examples given are only used to explain the present invention and are not used to limit the scope of the present invention.

### Embodiment 1

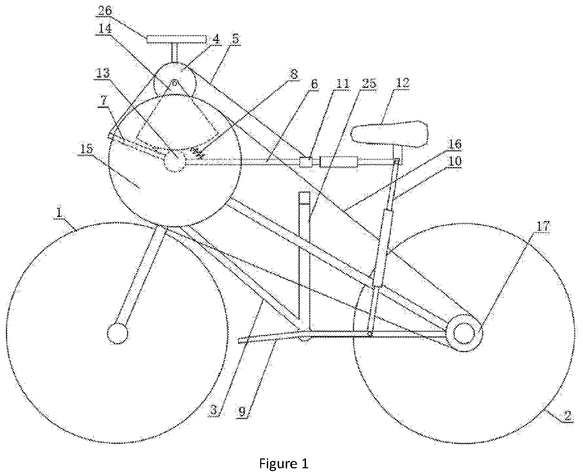

As shown in Fig.1, an adjustable speed effort-saving bicycle, comprises a front wheel assembly 1, a rear wheel assembly 2, and a bicycle frame 3, the front wheel assembly 1 and the rear wheel assembly 2 being mounted respectively on either the front or rear end of the vehicle frame 3.

Specifically, both the front wheel assembly 1, and the rear wheel assembly 2 are conventional bicycle wheel componets, comprising axles, spokes, rims, and tires, in which the tires are fixed on the rims and the rims are fixed on the axles via spokes; the bicycle frame 3 is a triangle structure, stability of the triangle ensures that overall structure of the bicycle is firm and reliable; and a handle 26 is fixed on the top of a front end of the bicycle frame3.

The present invention further comprises a quad-connecting rod mechanism, a chain sprocket 4, chain A 5, and a transmission mechanism for converting weight of a rider into a rocking force, wherein the quad-connecting rod mechanism is mounted on the bicycle frame 3, the chain sprocket 4 is rotatably mounted on the bicycle frame 3 and meshes with the middle part of chain A 5, the chain sprocket 4 is transmissively connected to the rear wheel assembly 2 via a transmission apparatus, one end of chain A 5 is slidably connected to an output frame-connecting rod 6 of the quad-connecting rod mechanism, a bent part 7 extends from a connecting end where the output frame-connecting rod 6 joins the bicycle frame 3, the other end of the chain A 5 is connected to the bent part 7, and a tensioner 8 used for tensioning chain A 5 is provided between the bent part 7 and the output frame-connecting rod 6; and a seat 12 is fixed at the hinge end between connecting rod 10 and output frame-connecting rod 6.

Specifically, by sliding the chain A 5 on the output frame-connecting rod 6, length of chain A 5 can be changed and output moment arm of the quad-connecting rod mechanism is changed so that transmission mechanism input is changed and speed can be adjusted.

Preferably, the tensioner 8 is a tension spring, ends of the tension spring are respectively connected to the bent part 7 and the output frame-connecting rod6, and the tensioning spring ensures that the chain A5 is always tensioned, with simple structure, easy procurement and reduced production cost.

The quad-connecting rod mechanism comprises a pedal 9, a connecting rod 10 and the output frame-connecting rod6; middle part of the pedal is rotatably mounted on a lower end of a middle part of the bicycle frame 3; a lower end of the connecting rod 10 is hinged to a rear end of the pedal 9, an upper end of the connecting rod 10 is hinged to an end of the output frame-connecting rod 6 far away from the bent part 7, and an end of the output frame-connecting rod far away from the connecting rod 10 is hinged to the bicycle frame 3; and on the chain sprocket 4 is fixedly provided a toothed sector14, on the bicycle frame 3 is installed a flywheel A 13 engaging with the toothed sector 14, and the flywheel A 13 is transmissively connected to the rear wheel assembly by the transmission mechanism.

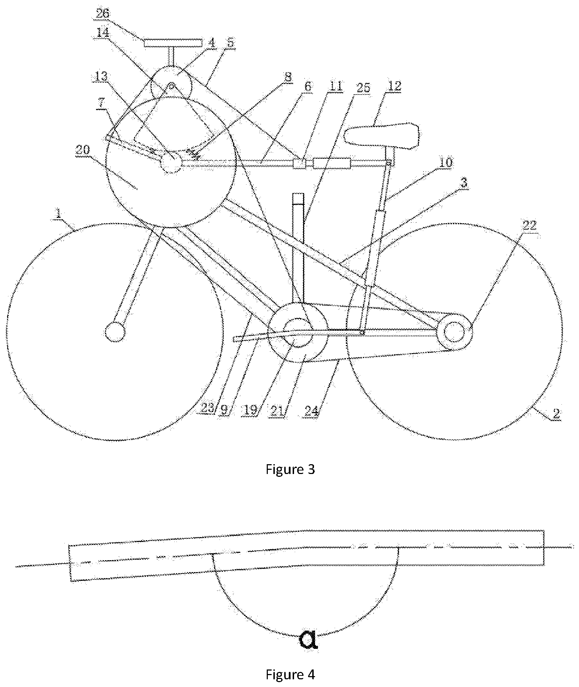

As shown in Fig.4, the pedal 9 comprises a bent strip, on the bent strip is provided two support arms forming an angle called Alpha, and the angle Alpha is larger than or equal to 179 degree and less than 180 degree.

A slide block 11 is arranged on the output frame-connecting rod 6, the slide block 11 is connected to an end of the chain A 5, the slide block 11 is connected to the output frame-connecting rod 6 by threads, by a spiral movement between the slide block 11 and the output frame-connecting rod 6, the rotation of the slide block 11 is converted into the sliding of one end of the chain A5 and by rotating the slide block 11, a relative displacement could occur between one end of the chain A 5 and the output frame-connecting rod 6.

Specifically, the slide block 11 is connected to the output frame-connecting rod 6 by threads, on the slide block 11 is provided a circular groove, and a circular connector is arranged and rotatable inside the circular groove, meanwhile, an end of the chain A 5 is connected to the circular connector, which drives the end of the chain A 5 to move only in a longitudinal direction of the output frame-connecting rod 6, thereby preventing deviation.

The bicycle frame 3 at the lower part is provided with a pedestal 25 for limiting downward movement of the output frame-connecting rod 6, the bottom of the pedestal 25 is fixed to the lower part of the bicycle frame 3 and on the top of the pedestal 25 is installed a cushion which is located directly below the middle of the output frame-connecting rod 6, and all of the pedestal 25, the connecting rod 10, and the output frame-connecting rod 6 are telescopic rods.

Specifically, pedestal 25, the connecting rod 10, and the output frame-connecting rod 6 all comprises an inner rod and an outer barrel, one end of the inner rod is slidably connected in the outer barrel and is locked by screws.

Further, the slide block 11 is sleeved on an inner rod of the output frame-connecting rod 6 and slide on the inner rod, moreover, a limit block is fixed on the inner rod of the output frame-connecting rod 6 at one end away from the outer barrel, and sliding distance of the slide block 11 on the inner rod of the output frame-connecting rod 6 is restricted by the limit block and the outer barrel.

On the chain sprocket 4 is fixedly provided a toothed sector 14, on the bicycle frame 3 is installed a flywheel A 13 engaging with the toothed sector 14, and the flywheel A 13 is transmissively connected to the rear wheel assembly 2 by the transmission mechanism.

The transmission mechanism comprises a flywheel B 15, a chain B 16 and a flywheel C 17; diameter of the flywheel B 15 is larger than diameter of the flywheel C 17, diameter of the flywheel B 15 is larger than diameter of the flywheel A 13, the flywheel B 15 and the flywheel A 13 are coaxially, fixedly connected, the flywheel C 17 is transmissively connected to the flywheel B 15 through the chain B 16, and central shaft of the flywheel C 17 is connected to the rear wheel assembly 2.

When cycling, a person's hip sits on the seat 12 and each foot is placed on a pedal 9 without applying any force, the seat 12 supports weight of the whole human body through the hip, gravity naturally acts downwards, consequently the output frame-connecting rod 6 is driven to swing downwards, and the pedal 9 is driven to tilt upwards, the toothed sector 14 rotates clockwise, the flywheel A 13 rotates counterclockwise so that the flywheel B 15 and chain B 16 are driven to rotate, the flywheel C 17 drives the rear wheel assembly 2 to rotate counterclockwise, and the bicycle moves forwards, at the same time, a connecting shaft and the intermediate flywheel 18 is not transmitting, and the intermediate flywheel 18 merely communicate with the chain B 16. Then the person presses the pedal 9 down with force from the feet, that is, via lifting the hip, the body weight exerts a downward force on the pedal 9 to drive the connecting rod 10 and the output frame-connecting rod 6 upward. In addition, due to the lever action among the pedal 9, the connecting rod 10 and the seat 12, the downward force applied to the pedal 9 multiplies at the seat 12 so that it is more effort-saving to drive the output frame-connecting rod 6 to swing, the output frame-connecting rod 6 drives a connected end of the chain A 5 to swing, the chain sprocket 4 rotates to drive the toothed sector 14 to rotate and mesh with the flywheel A 13, the flywheel A 13 reverses and stops transmission to the flywheel B, meanwhile the intermediate flywheel 18 is directly driven by the rotating shaft to rotate counterclockwise, and the chain A 5 is driven by the intermediate flywheel 18, thereby driving the flywheel C 17 and the rear wheel assembly 2 to rotate counterclockwise, and the bicycle continues to move forward. And the bicycle cycling is completed by repeating the above process.

Specifically, when cycling, the output torque could be adjusted directly by adjusting the position of the slide block 11 relative to the output frame-connecting rod 6, thereby completing the speed adjustment. And the slide block 11 slides freely on the output frame-connecting rod 6 ensures continuously variable speed regulation, which is more suitable for the needs of riders.

### Embodiment 2

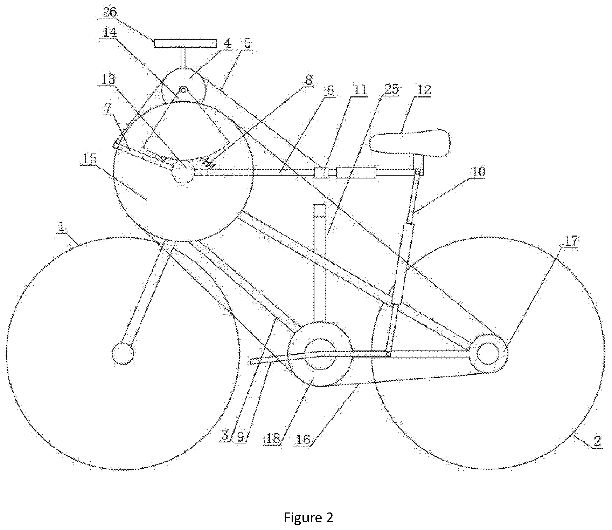

As shown in Fig. 2, differences between present embodiment and Embodiment 1 are as follows: the transmission mechanism further comprises an intermediate flywheel 18, and a rotating shaft extending perpendicularly from the rotatable connection point between the pedal 9 and the bicycle frame 3, the intermediate flywheel 18 is fixedly sleeved on the rotating shaft, and the intermediate flywheel 18 is transmissively connected to the flywheel C 17 via the chain B 16.

Specifically, when cycling, output torque could be adjusted directly by adjusting the position of the slide block 11 relative to the output frame-connecting rod 6, thereby completing the speed adjustment. And the slide block 11 slides freely on the output frame-connecting rod 6 ensures continuously variable speed regulation, which is more suitable for the needs of riders.

### Embodiment 3

As shown in Fig. 3, differences between the present embodiment and Embodiment 1 are as follows: the transmission mechanism comprises a chain C 23, a chain D 24, a flywheel E 20, a flywheel D 22, a transition flywheel 19 and an intermediate flywheel 21, the rotating shaft is vertically extended from the rotation connection point between the pedal 9 and the bicycle frame 3, the transition flywheel 19 is sleeved on the rotating shaft, the intermediate chain disc21 is coaxially arranged with the transition flywheel 19 and fixedly connected to the outer disc body of the transition flywheel 19, the flywheel E 20 is fixedly, coaxially connected with the flywheel A 13, diameter of the flywheel E 20 is larger than that of the flywheel A 13, the flywheel E 20 is transmissively connected to the transition flywheel 19 by the chain C 23, the intermediate chain disc 21 is transmissively connected to the flywheel D 22 by the chain D 24, the flywheel D 22 is connected to the rear wheel assembly 2, diameter of the flywheel E 20 is larger than that of the intermediate chain disc 21, diameter of the intermediate chain disc 21 is larger than that of the flywheel D 22, and diameter of the flywheel D 22 is larger than that of the transition flywheel 19.

Specifically, the transition flywheel 19 comprises a ratchet disc and an outer disc provided with ratchet claws, the outer disc and the ratchet disc complete transmission or stop transmitting by the ratchet claws. The intermediate chain disc 21 is arranged coaxially with the transition flywheel 19 and is connected to the outer disc of the transition flywheel 19, thereby ensuring that when the pedal 9 rotates clockwise and the flywheel E20 rotates counterclockwise, the rotation shaft drives the ratchet disc clockwise, and there is no transmission occurred between the ratchet disc and the outer disc, meanwhile, the outer disc is driven to rotate counterclockwise by the chain C 23 so that intermediate chain disc 21 is driven to rotate counterclockwise, and thereby ensuring that the rear wheel assembly 2 could move forward.

When cycling, a person's hip sits on the seat 12 and each foot is placed on a pedal 9 without applying any force, the seat 12 supports weight of the whole human body by the hip, a gravity naturally acts downwards, meanwhile the output frame-connecting rod 6 is driven to swing downwards, and the pedal 9 is driven to tilt upwards, the chain A 5 moves with the output frame-connecting rod 6 so that the chain sprocket 4 is driven to rotate clockwise, the toothed sector 14 is driven to rotate clockwise, and the flywheel A 13 is driven to rotate counterclockwise, then the flywheel E 20 and chain C 23 are driven to rotate, the transition flywheel 19 is driven to rotate , the transition flywheel 19 drives the intermediate chain disc 21 and the chain D 24 to rotate so that the rear wheel assembly 2 is driven to rotate counterclockwise and the bicycle moves forwards; at the same time, a connecting shaft and the intermediate flywheel18 is not transmitting, and the intermediate flywheel 18 merely communicates with the chain C 23. Then the person presses the pedal 9 down with force from the feet, that is, via lifting the hip, the body weight exerts a downward force on the pedal 9 to drive the connecting rod 10 and the output frame-connecting rod 6 upward. In addition, due to the lever action among the pedal 9, the connecting rod 10 and the seat 12, the downward force applied to the pedal 9 multiplies at the seat 12 so that it is more effort-saving to drive the output frame-connecting rod 6 to swing, when the flywheel A 13 reverses and stops transmission to the flywheel B, the transition flywheel 19 is directly driven by the rotating shaft to rotate counterclockwise, and the intermediate chain disc 21 is driven by the transition flywheel 19 so that the flywheel D 22and the rear wheel assembly 2 are driven to rotate counterclockwise via chain D 24, then the bicycle continues to move forward.

And the bicycle cycling is completed by repeating the above process.

Specifically, in Embodiments 1-3, during cycling, by directly rotating the slide block 11, the slide block 11 and the inner rod form a sliding screw transmission, which drives one end of the chain A 5 to slide along with it. In other words, by adjusting the position of the slide block 11 relative to the output frame-connecting rod6, output torque could be adjusted, and the slide block 11 slides freely on the output frame-connecting rod 6 so as to ensure the continuously variable speed regulation, which is more suitable for the needs of riders.

### Embodiment 4

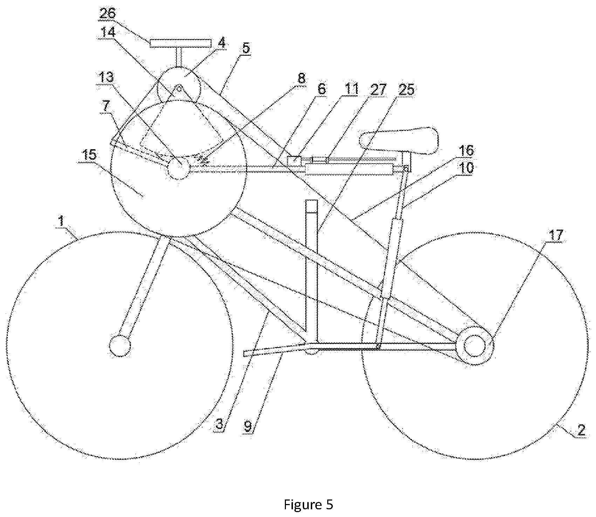

As shown in Fig. 5, differences between present embodiment and Embodiment 1 are as follows: the output frame-connecting rod 6 is sleeved with the slide block 11 which is connected to one end of the chain A 5, and on the output frame-connecting rod 6 is installed the transmission mechanism for driving the slide block 11 to slide along the output frame-connecting rod 6.

Specifically, the transmission mechanism comprises a set of a threaded rod and a nut and a position-limit bracket, the threaded rod and the nut are in a threaded connection, and both ends of the threaded rod extend beyond both sides of the position-limit bracket, the position-limit bracket is fixed on the output frame-connecting rod 6, the nut is arranged on the position-limit bracket, and position of the nut is limited by the position-limit bracket so that the nut could just rotate, the threaded rod can be driven to move by rotating the nut, and one end of the screw threaded rod is fixedly connected with the slide block, which drives the slide block to slide along the output frame-connecting rod 6.

Further, the position-limit bracket comprises two position-limit baffles arranged in parallel, on the position-limit baffles are provided through-holes for passing the threaded rod, one end of each position-limit baffle is fixed on the outer barrel of the output frame-connecting rod 6 and the nut is arranged between two position-limit baffles.

### Embodiment 5

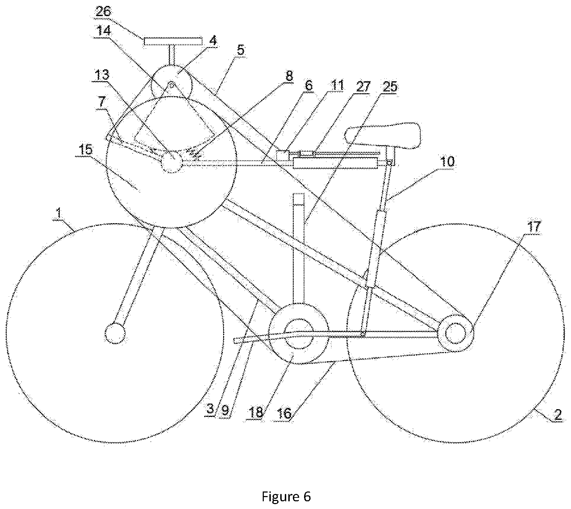

As shown in Fig. 6, differences between the present embodiment and Embodiment 2 are as follows: the output frame-connecting rod 6 is sleeved with the slide block 11 which is connected to one end of the chain A 5, and on the output frame-connecting rod 6 is installed the transmission mechanism for driving the slide block 11 to slide along the output frame-connecting rod 6.

Specifically, the transmission mechanism comprises a set of a threaded rod and a nut and a position-limit bracket, the threaded rod and the nut are connected by thread, and both ends of the threaded rod extend beyond both sides of the position-limit bracket, the position-limit bracket is fixed on the output frame-connecting rod 6, the nut is arranged on the position-limit bracket, and position of the nut is limited by the position-limit bracket so that the nut could just rotate, the threaded rod can be driven to move by rotating the nut, and one end of the threaded rod is connected with the slide block 11, which drives the slide block 11 to slide along the output frame-connecting rod 6.

Further, the position-limit bracket comprises two parallel position-limit baffles, on the position-limit baffles are provided through-holes for passing the threaded rod, one end of each of the position-limit baffles is fixed onto the outer barrel of the output frame-connecting rod 6 and the nut locates between two position-limit baffles.

### Embodiment 6

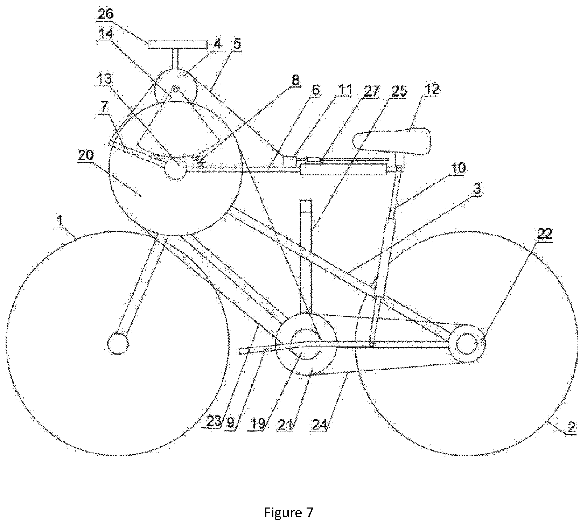

As shown in Fig. 7, differences between the present embodiment and Embodiment 3 are as follows: the output frame-connecting rod 6 is sleeved with a slide block 11 which is connected to one end of the chain A 5, and on the output frame-connecting rod 6 is installed the transmission mechanism for driving the slide block 11 sliding along the output frame-connecting rod6.

Specifically, the transmission mechanism comprises a set of a threaded rod and a nut and a position-limit bracket, the threaded rod and the nut are connected by thread, and both ends of the threaded rod extend beyond both sides of the position-limit bracket, the position-limit bracket is fixed on the output frame-connecting rod 6, the nut is arranged on the position-limit bracket, and position of the nut is limited by the position-limit bracket so that the nut could just rotate, the threaded rod can be driven to move by rotating the nut, and one end of the threaded rod is connected with the slide block 11, which drives the slide block 11 to slide along the output frame-connecting rod 6.

Further, the position-limit bracket comprises two parallel position-limit baffles, on the position-limit baffles are provided through-holes for passing the threaded rod, one end of each of the position-limit baffles is fixed onto the outer barrel of the output frame-connecting rod 6 and the nut locates between two position-limit baffles.

Specifically, in Embodiments 4-6, during cycling, by just rotating the nut in the set of the threaded rod and the nut, the threaded rod converts the rotation of the nut into linear motion, and at the same time drives the slide block 11 to slide along the output frame-connecting rod 6; under the effect of the tensioner, the chain A 5 is tensioned so that the length thereof is changed, in this way, magnitude of the output torque arm could be adjusted, the transmission ratio could be changed, and the speed could be adjusted; and the slide block 11 slides freely on the output frame-connecting rod 6 to ensure a continuously variable speed regulation, which is more suitable for the needs of riders.

Among all the above embodiments, the flywheel in the present invention could adopt a flywheel C recorded in the patent with an application number CN201620691351.6 and a title called "Exercycle that pedal corotation reversal homoenergetic moved ahead".

The foregoing is only a better embodiment of the present invention and is not used to restrict the present invention. Any modification, equivalent replacement, improvement, etc. made within the spirit and principles of the present invention shall be included in the scope of protection of the present invention.

## Claims

1. An adjustable speed effort-saving bicycle comprises a front wheel assembly (1), a rear wheel assembly (2), and a bicycle frame (3); the front wheel assembly (1) and the rear wheel assembly (2) being mounted respectively on a front or rear end of the bicycle frame (3); and the bicycle further comprises a quad-connecting rod mechanism, a chain sprocket (4), chain A (5), and a transmission mechanism for converting weight of a rider into a rocking force, in which the quad-connecting rod mechanism is mounted on the bicycle frame (3), the chain sprocket (4) is rotatably mounted on the bicycle frame (3) and meshes with a middle part of chain A (5), the chain sprocket (4) is transmissively connected to the rear wheel assembly (2) via the transmission mechanism, one end of chain A (5) is slidably connected to an output frame-connecting rod (6) of the quad-connecting rod mechanism, a bent part (7) extends from a connecting end of the output frame-connecting rod (6) to the bicycle frame (3), the other end of chain A (5) is connected to the bent part (7), and a tensioner (8) used for tensioning chain A (5) is provided between the bent part (7) and the output frame-connecting rod (6).

2. The adjustable speed effort-saving bicycle according to claim 1, wherein the quad-connecting rod mechanism comprises a pedal (9), a connecting rod (10) and the output frame-connecting rod (6); a middle part of the pedal is rotatably mounted on a lower end of a middle part of the bicycle frame (3), a lower end of the connecting rod (10) is hinged to a rear end of the pedal (9), an upper end of the connecting rod (10) is hinged to an end of the output frame-connecting rod (6) far away from the bent part (7), and an end of the output frame-connecting rod (6) far away from the connecting rod (10) is hinged to the bicycle frame (3).

3. The adjustable speed effort-saving bicycle according to claim 2, wherein the pedal (9) comprises a bent strip, of which two support arms forming an angle called Alpha is configured, and the angle Alpha is larger than or equal to 179 degree and less than 180 degree.

4. The adjustable speed effort-saving bicycle according to claim 2, wherein a slide block (11) is arranged on the output frame-connecting rod (6), the slide block (11) is connected to an end of the chain A (5), and a screw transmission mechanism for driving the slide block (11) to slide along the output frame-connecting rod (6) is disposed on the output frame-connecting rod (6).

5. The adjustable speed effort-saving bicycle according to claim 4, wherein a handle (26) is fixed on a top part of a front end of the bicycle frame (3), and a seat (12) is fixed on a hinged end between the connecting rod (10) and the output frame-connecting rod (6).

6. The adjustable speed effort-saving bicycle according to claim 5, wherein a toothed sector (14) is fixedly provided on the chain sprocket (4), a flywheel A (13) engaging with the toothed sector (13) is installed on the bicycle frame (3), and the flywheel A (13) is transmissively connected to the rear wheel assembly (2) by the transmission mechanism.

7. The adjustable speed effort-saving bicycle according to claim 6, wherein a pedestal (25) for limiting downward movement of the output frame-connecting rod (6) is provided at a lower part of the bicycle frame (3), a bottom end of the pedestal (25) is fixed to a lower part of the bicycle frame (3) and on top of the pedestal (25) is installed a cushion which is located directly below a middle part of the output frame-connecting rod (6), and all of the pedestal (25), the connecting rod (10), and the output frame-connecting rod (6) are telescopic rods.

8. The adjustable speed effort-saving bicycle according to claim 1, wherein the transmission mechanism comprises a flywheel B (15), a chain B (16) and a flywheel C (17), diameter of the flywheel B (15) is larger than diameter of the flywheel C (16), diameter of the flywheel B (15) is larger than diameter of the flywheel A (13), the flywheel B (15) and the flywheel A (13) are coaxially connected, the flywheel C (17) is transmissively connected to the flywheel B (15) by the chain B (16), and a central shaft of the flywheel C (17) is connected to the rear wheel assembly (2).

9. The adjustable speed effort-saving bicycle according to claim 8, wherein the transmission mechanism further comprises an intermediate flywheel (18); a rotating shaft extends perpendicularly from a rotatable connection point between the pedal (9) and the bicycle frame (2), the intermediate flywheel (18) is fixedly sleeved on the rotating shaft, and the intermediate flywheel (18) is transmissively connected to the flywheel C (17) via the chain B (16).

10. The adjustable speed effort-saving bicycle according to any of claim 1-7, wherein the transmission mechanism comprises a chain C (23), a chain D (24), a flywheel E (20), a flywheel D (22), a transition flywheel (19) and an intermediate chain disc (21); a rotating shaft extends vertically from a rotatable connection between the pedal (9) and the bicycle frame (3), the transition flywheel (19) is sleeved on the rotating shaft, the intermediate chain disc (21) and the transition flywheel (19) are coaxially configured and the intermediate chain disc (21) is connected to an outer disc body of the transition flywheel (21); the flywheel E (20) is coaxially connected with the flywheel A (13), diameter of the flywheel E (20) is larger than diameter of the flywheel A (13), the flywheel E (20) is transmissively connected to the transition flywheel (19) via the chain C (23); the intermediate chain disc (21) is transmissively connected to the flywheel D (22) via the chain D (24), the flywheel D (22) is connected to the rear wheel assembly (2), diameter of the flywheel E (20) is larger than diameter of the intermediate chain disc (21), diameter of the intermediate chain disc (21) is larger than diameter of the flywheel D (22), and diameter of the flywheel D (22) is larger than diameter of the transition flywheel (19).
